# EUROPÄISCHE PATENTSCHRIFT

(11) **EP 2 046 898 B1**
(45) Veröffentlichungstag und Bekanntmachung des Hinweises auf die Patenterteilung: **14.10.2009**
(21) Anmeldenummer: 07764977.0
(22) Anmeldetag: 30.06.2007
(51) Int. Cl.: C09D 4/00, C09D 17/00

(54) **MIT POLYMERISIERBAREM COATING MODIFIZIERTE PIGMENTE, DEREN HERSTELLUNG UND ANWENDUNG**
PIGMENTS MODIFIED BY A POLYMERISABLE COATING, AND PRODUCTION AND USE OF SAME
PIGMENTS MODIFIÉS PAR UN REVÊTEMENT POLYMÉRISABLE, LEUR PRODUCTION, ET LEUR UTILISATION

(30) Priorität: 25.07.2006 DE 102006034240
(43) Veröffentlichungstag der Anmeldung: 15.04.2009
(73) Patentinhaber: Clariant Finance (BVI) Limited, Road Town, Tortola (VG)
(72) Erfinder: HEINRICHS, Franz-Leo, 86456 Gablingen (DE)
(74) Vertreter: Hütter, Klaus
(86) Internationale Anmeldenummer: PCT/EP2007/005817
(87) Internationale Veröffentlichungsnummer: WO 2008/011962

(56) Entgegenhaltungen:
- EP-A- 1 621 587
- EP-A1- 0 061 726
- EP-A2- 1 204 005

## Beschreibung

Zur Pigmentierung von flüssigen Systemen, wie Anstrichmitteln, Lacken, Dispersions- und Druckfarben, werden üblicherweise Pigmentpräparationen eingesetzt, die Wasser, organisches Lösungsmittel oder Mischungen davon enthalten. Neben anionischen, kationischen, nichtionischen oder amphoteren Dispergiermitteln müssen diesen Pigmentpräparationen in der Regel weitere Hilfsmittel, wie Eintrocknungsverhinderer, Mittel zur Erhöhung der Gefrierbeständigkeit, Verdicker und Antihautmittel, zur Stabilisierung zugesetzt werden. Die Pigmente sind in der Regel unbehandelt, können aber mit Harzen, Wachsen und Polymeren stabilisiert sein, damit sie nicht aus der Matrix ausbluten. Trotz der vielen Zusatzstoffe und Stabilisierungsmittel können nach dem Auftrocknen solcher flüssigen Systeme die Pigmente aus dem Bindemittelsystem ausgewaschen oder auspoliert werden, da sie keine chemische Bindung an die Bindemittelmatrix haben.
Für wässrige Systeme sind in der Technik harz- oder polymerstabilisierte Systeme bekannt. Es ist wichtig, dass die Harze oder Polymere der Oberflächenbehandlung mit den anderen Inhaltsstoffen der Pigmentdispersion verträglich sind. Bei Unverträglichkeiten kann es zur Reagglomeration des Pigmentes kommen, die Viskosität kann sich erhöhen, das Fließverhalten und die Farbwirkung können sich ändern.
Bei der Einfärbung von Kunststoffen werden die Pigmente oftmals mit Wachs zusammen eingesetzt. Beispiele für wachsbehandelte Pigmente sind z.B. beschrieben in der DE-A-199 41 061 oder US 5,298,355. In der DE-A-199 41 061 wird der noch feuchte Pigmentkuchen mit einer wachshaltigen Lösemittel/Wasser Mischung als Finish behandelt. Es resultieren Granulate für den Einsatz in Kunststoffanwendungen. In US 5,298,355 wird das Wachs aus einem Lösemittel auf das Pigment gefällt. Solche Pigmente zeigen eine gute Verträglichkeit mit Polymeren, können aber in wässrigen Systemen nicht mehr eingesetzt werden.

Es war daher die Aufgabe gestellt, Pigmente in einer Form zu präparieren, dass sie ohne Einbußen bei der Farbwirkung ein reaktives wachsartiges Coating erhalten, so dass es möglich ist, das Farbmittel in einer Matrix chemisch zu fixieren, und damit Unverträglichkeiten oder Austragungen zu verhindern.

Es wurde gefunden, dass nachstehende Pigmentpräparation diese Aufgabe überraschenderweise löst.

Gegenstand der Erfindung ist eine Pigmentpräparation, enthaltend als wesentliche Bestandteile
(a) 5 bis 70 Gew.-%, vorzugsweise 8 bis 60 Gew.-%, insbesondere 10 bis 50 Gew.-%, mindestens eines Pigments P, das mit mindestens einer polymerisierbaren, ethylenisch ungesättigten Verbindung B beschichtet ist;
(b) 0,1 bis 15 Gew.-%, vorzugsweise 0,1 bis 12 Gew.-%, insbesondere 0,5 bis 5 Gew.-%, mindestens eines nichtionischen oberflächenaktiven Additivs C auf der Basis von Polyethern und/oder Polyglycerinen;
(c) 0,1 bis 15 Gew.-%, vorzugsweise 0,1 bis 10 Gew.-%, insbesondere 0,5 bis 2 Gew.-%, mindestens eines anionischen oberflächenaktiven Additivs D auf der Basis von Sulfonaten, Sulfaten, Carboxylaten, Phosphonaten oder Phosphaten;
(d) 10 bis 90 Gew.-%, vorzugsweise 10 bis 70 Gew.-%, insbesondere 10 bis 60 Gew.-%, Wasser,
(e) 0 bis 20 Gew.-%, vorzugsweise 0,01 bis 10 Gew.-%, insbesondere 0,1 bis 5 Gew.-%, übliche Zusatzstoffe,
wobei die Summe der Gewichtsprozente 100 Gew.-% nicht überschreitet.

In der erfindungsgemäßen Pigmentpräparation kann das Pigment P ein organisches Buntpigment, ein anorganisches Buntpigment, ein Weißpigment, ein Russpigment oder eine Kombination mehrerer Pigmente sein.

Das organische Buntpigment kann vorzugsweise ein Azopigment, ein Anthanthronpigment, ein Anthrapyrimidinpigment, ein Chinacridonpigment, ein Chinophthalonpigment, ein Diketopyrrolopyrrolpigment, ein Dioxazinpigment, ein Indanthronpigment, ein Isoindolinpigment, ein Isoindolinonpigment, ein Isoviolanthronpigment, ein Perylenpigment, ein Perinonpigment, ein Phthalocyaninpigment, ein Pyranthronpigment, ein Pyrazolochinazolonpigment, ein Thioindigopigment, ein Triarylcarboniumpigment oder eine Kombination davon sein.

Beispiele für Pigmente P sind:
Azopigmente:
C.I. Pigment Yellow 12, 13, 14, 16, 17, 26, 74, 81, 83, 97, 106, 113, 120, 127, 151, 155, 174,176,180, 188, 213, 214;
Disazopigmente:
C.I. Pigment Orange 16, 34, 44, 72, 108;
Disazokondensationspigmente:
C.I. Pigment Red 144, 166, 214, 220, 221, 242, 262;
C.I. Pigment Yellow 93, 95 und 128;
C.I. Pigment Brown 23 und 41;
Anthanthronpigmente:
C.I. Pigment Red 168;
Anthrachinonpigmente:
C.I. Pigment Yellow 147, 177 und 199;
C.I. Pigment Violet 31;
Anthrapyrimidinpigmente:
C.I. Pigment Yellow 108;
Chinacridonpigmente:
C.I. Pigment Orange 48 und 49;
C.I. Pigment Red 122, 202, 206 und 209;
C.I. Pigment Violet 19;
Chinophthalonpigmente:
C.I. Pigment Yellow 138;
Diketopyrrolopyrrolpigmente:
C.I. Pigment Orange 71, 73 und 81;
C.I. Pigment Red 254, 255, 264, 270 und 272;
Dioxazinpigmente:
C.I. Pigment Violet 23 und 37;
C.I. Pigment Blue 80;
Flavanthronpigmente:
C.I. Pigment Yellow 24;
Indanthronpigmente: C.I. Pigment Blue 60 und 64;
Isoindolinpigmente: C.I. Pigment Orange 61 und 69;
C.I. Pigment Red 260;
C.I. Pigment Yellow 139 und 185;
Isoindolinonpigmente: C.I. Pigment Yellow 109, 110 und 173;
Isoviolonthronpigmente: C.I. Pigment Violet 31;
Metallkomplexpigmente: C.I. Pigment Red 257;
C.I. Pigment Yellow 117, 129, 150, 133 und 177;
C.I. Pigment Green 8;
Perinonpigmente: C.I. Pigment Orange 43;
C.I. Pigment Red 194;
Perylenpigmente: C.I. Pigment Black 31 und 32;
C.I. Pigment Red 123, 149, 178, 179, 190 und 224;
C.I. Pigment Violet 29;
Phthalocyaninpigmente: C.I. Pigment Blue 15, 15:1, 15:2,
15:3, 15:4, 15:6 und 16;
C.I. Pigment Green 7 und 36;
Pyranthronpigmente: C.I. Pigment Orange 51;
C.I. Pigment Red 216;
Pyrazolochinazolonpigmente:
C.I. Pigment Orange 67;
C.I. Pigment Red 251;
Thioindigopigmente: C.I. Pigment Red 88 und 181;
C.I. Pigment Violet 38;
Triarylcarboniumpigmente:
C.I. Pigment Blue 1, 61 und 62;
C.I. Pigment Green 1;
C.I. Pigment Red 81, 81:1 und 169;
C.I. Pigment Violet 1, 2, 3 und 27;
C.I. Pigment Black 1 (Anilinschwarz);
C.I. Pigment Yellow 101 (Aldazingelb);
C.I. Pigment Brown 22.

Geeignete anorganische Farbpigmente sind z.B.:
Weißpigmente: Titandioxid (C.I. Pigment White 6), Zinkweiß, Farbenzinkoxid; Zinksulfid,
Lithopone;
Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7); Buntpigmente:
Chromoxid, Chromoxidhydratgrün; Chromgrün (C.I. Pigment Green 48); Cobaltgrün (C.I. Pigment Green 50);
Ultramaringrün ; Kobaltblau (C.I. Pigment Blue 28 und 36; C.I. Pigment Blue 72); Ultramarinblau; Manganblau;
Ultramarinviolett; Kobalt- und Manganviolett; Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot
Eisenoxidbraun (C.I. Pigment Brown 6 und 7), Mischbraun, Spinell- und Korundphasen (C.I. Pigment Brown 29, 31, 33, 34,35, 37, 39 und 40), Chromtitangelb (C.I. Pigment Brown 24),
Chromorange; Cersulfid (C.I. Pigment Orange 75);
Eisenoxidgelb (C.I. Pigment Yellow 42); Nickeltitangelb (C.I. Pigment Yellow 53; C.I. Pigment Yellow 157, 158, 159, 160,161, 162, 163, 164 und 189);
Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).
Cersulfid (C.I. Pigment Red 265);
Molybdatrot (C.I. Pigment Red 104); Ultramarinrot

Besonders bevorzugt ist Pigment P ein Gelb-, Cyan-, Magenta- oder Schwarz-Pigment.

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.
Auch Glanzpigmente kommen in Betracht, wobei es sich um einphasig oder mehrphasig aufgebaute plättchenförmige Pigmente handelt, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Die mittlere Teilchengröße d₅₀ der Pigmente P liegt vorzugsweise bei einem Wert zwischen 50 und 500 nm, insbesondere zwischen 70 nm und 200 nm, besonders bevorzugt zwischen 70 und 150 nm.

Der polymerisierbare Überzug (B) enthält vorzugsweise mindestens eine reaktive ungesättigte Komponente aus der Gruppe der Umsetzungsprodukte langkettiger Carbonsäuren B1 mit Polyolen B2 und ethylenisch ungesättigten Säuren B3, beispielhaft dargestellt am Umsetzungsprodukt aus Pentaerythrit, einer Mischung langkettiger Carbonsäuren auf Basis technischer Montanwachssäure und Acrylsäure: 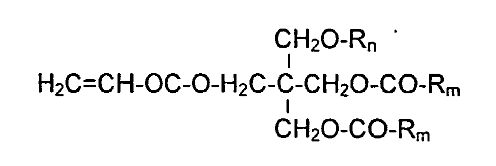 Rₙ = H, CO-Rₘ, Rₘ = Alkylrest der Montanwachssäure.

Als langkettige Carbonsäuren B1 können alle Carbonsäuren mit mehr als 7 C-Atomen eingesetzt werden, bevorzugt aber C₈-C₂₂ -Fettsäuren und C₂₂-C₅₀-Wachssäuren, entweder in reiner Form, oder aber bevorzugt in Form von Mischungen technischer Produkte wie z.B. Kokosfettsäure, Talgfettsäure, Sonnenblumensäure, Montanwachssäure, Paraffinoxidat oder Olefinoxidat. Zur Molgewichtsvergrößerung können die Mischungen der langkettigen Carbonsäuren noch mit geringen Anteilen an Dicarbonsäuren wie Adipinsäure, Dodecandisäure, Montanwachsdicarbonsäuren modifiziert sein.
Als Polyole B2 können an Stelle von Pentaerythrit auch andere Polyolkomponenten eingesetzt werden, bevorzugt aber aliphatische Polyole mit 2 bis 10 C-Atomen und 2 bis 10 OH Gruppen, wie Glykole, Glycerin, Trimethylolpropan, Zuckeralkohole, Sorbitol und deren interne Ether wie Sorbitane, deren Oligomere wie Diglycerin, Dipentaerythrit, deren Polymere wie Polyglykole oder Polyglycerine oder die Alkoxylate der genannten Polyole. Als ethylenisch ungesättigte Verbindungen B3 können Acrylsäure, Methacrylsäure, Maleinsäure, Fumarsäure, Itaconsäure, sowie deren Anhydride oder Ester eingesetzt werden. Die Stöchiometrie wird so gewählt, dass auf ein Mol Polyol-Fettsäure-Partialester ein Mol der ungesättigten Säure umgesetzt wird. Die Herstellung der polymerisierbaren Verbindung B kann erfolgen, indem das Polyol mit der langkettigen aliphatischen Carbonsäure zu einem Partialester umgesetzt wird. Dieser kann durch Veresterung mit einer Dicarbonsäure noch zu einem Polyesterwachs weiter umgesetzt werden. An diese Partialesterkomponente wird dann noch eine ethylenisch ungesättigte Säure über Veresterung gebunden, so dass ein festes reaktives Produkt mit einem Schmelzpunkt zwischen 40 und 90°C entsteht. Derartige reaktive Verbindungen sind bekannt und im Handel z.B. unter dem Namen ®Licomont ER 165 (Clariant) erhältlich.

Die Menge des polymerisierbaren Überzugs B zum Pigment P beträgt vorzugsweise 5 bis 95 Gew.-%, besonders bevorzugt 20 bis 70 Gew.-%, insbesondere 30 bis 60 Gew.-%, relativ zum Gewicht des Pigments P.

Als Komponente C enthalten die erfindungsgemäßen Pigmentpräparationen mindestens ein nichtionisches oberflächenaktives Additiv auf der Basis von Polyethern oder Polyglycerinen. Bei den Polyethern handelt es sich insbesondere um Polyalkylenoxide oder Umsetzungsprodukte von Alkylenoxiden mit Alkoholen, Aminen, aliphatischen Carbonsäuren oder aliphatischen Carbonsäureamiden. Erfindungsgemäß soll dabei unter dem Begriff Alkylenoxid auch arylsubstituiertes Alkylenoxid, insbesondere phenylsubstituiertes Ethylenoxid, verstanden werden.

Neben den ungemischten Polyalkylenoxiden, vorzugsweise C₂-C₄-Alkylenoxide und phenylsubstituierte C₂-C₄-Alkylenoxide, insbesondere Polyethylenoxiden, Polypropylenoxiden und Poly(phenylethylenoxide), sind vor allem Alkylenoxidblockcopolymere, aber auch statistische Copolymere dieser Alkylenoxide geeignet. Ganz besonders geeignet sind dabei Blockcopolymere, die Polypropylenoxid- und Polyethylenoxidblöcke oder auch Poly(phenylethylenoxid)- und Polyethylenoxidblöcke aufweisen. Sie können wie die ungemischten Polyalkylenoxide durch Polyaddition der Alkylenoxide an Starterverbindungen, wie gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide, erhalten werden. Bei Einsatz von Ethylenoxid und Propylenoxid können diese Starterverbindungen zunächst mit Ethylenoxid und dann mit Propylenoxid oder zunächst mit Propylenoxid und dann mit Ethylenoxid umgesetzt werden. Üblicherweise werden 1 bis 300 mol, bevorzugt 3 bis 150 mol, Alkylenoxid je mol Startermolekül eingesetzt. Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol, 2-Hexyldecanol, Heptadecanol, Octadecanol, 2-Heptylundecanol, 2-Octyldecanol, 2-Nonyltridecanol, 2-Decyltetradecanol, Oleylalkohol und 9-Octadecenol sowie auch Mischungen dieser Alkohole wie C₁₂/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mn von 200 bis 5000, vor allem von 400 bis 2000 auf.
Als Beispiele für die oben genannten aromatischen Alkohole seien neben alpha- und β-Naphthol und deren Alkylderivaten insbesondere Phenol und seine Alkylderivate, wie Hexylphenol, Heptylphenol, Octylphenol, Nonylphenol, Isononylphenol, Undecylphenol, Dodecylphenol, Di- und Tributylphenol und Dinonylphenol genannt.
Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt. Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.
Geeignete Carbonsäureamide leiten sich von diesen Carbonsäuren ab.
Neben den Alkylenoxidaddukten an diese einwertigen Amine und Alkohole sind die Alkylenoxidaddukte an mindestens bifunktionelle Amine und Alkohole von ganz besonderem Interesse.
Als mindestens bifunktionelle Amine sind zwei- bis fünfwertige Amine bevorzugt, die insbesondere der Formel H₂N-(R-NR¹)n-H (R: Alkylen; R¹: Wasserstoff oder C₁-C₆-Alkyl; n: 1 bis 5) entsprechen. Im Einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist. Vorzugsweise werden diese Amine zunächst mit Propylenoxid und anschließend mit Ethylenoxid umgesetzt. Der Gehalt der Blockcopolymere an Ethylenoxid liegt üblicherweise bei etwa 10 bis 90 Gew.-%. Die Blockcopolymere auf Basis mehrwertiger Amine weisen in der Regel mittlere Molekulargewichte Mn von 1000 bis 40000, vorzugsweise 1500 bis 30000, auf.
Als mindestens bifunktionelle Alkohole sind zwei- bis fünfwertige Alkohole bevorzugt Beispielsweise seien C₂-C₃-Alkylenglykole und die entsprechenden Di- und Polyalkylenglykole, wie Ethylenglykol, Propylenglykol- 1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%.
Die Blockcopolymere auf Basis mehrwertiger Alkohole weisen im allgemeinen mittlere Molekulargewichte Mn von 1000 bis 20000, vorzugsweise 1000 bis 15000, auf.
Derartige Alkylenoxidblockcopolymere sind bekannt und im Handel z.B. unter den Namen Tetronic® und Pluronic® (BASF) erhältlich.
In Abhängigkeit von dem Anwendungsmedium, in dem die erfindungsgemäßen Pigmentzubereitungen eingesetzt werden sollen, wählt man Alkylenoxidblockcopolymere mit unterschiedlichen HL B-Werten (Hydrophilic-Lipophilic Balance) aus.
So sind für den Einsatz in wässrigen, wässrig/alkoholischen und alkoholischen Systemen Alkylenoxidblockcopolymere mit HLB-Werten von etwa 10 bevorzugt, was einem Ethylenoxidanteil an den Copolymeren von in der Regel 25 Gew.-% entspricht.
Bei den Polyglycerinen handelt es sich insbesondere um Glyceride von Fettsäuren, wie Polyglycerin-polyricinoleat.

Als Komponente D enthalten die erfindungsgemäßen Pigmentpräparationen mindestens ein anionisches oberflächenaktives Additiv auf der Basis von Sulfonaten, Sulfaten, Carboxylaten, Phosphonaten oder Phosphaten. Beispiele für geeignete Sulfonate sind aromatische Sulfonate, wie p-C₃-C₉-Alkylbenzolsulfonate, Di-(C₁-C₈-alkyl)naphthalinsulfonate und Kondensationsprodukte von Naphthalinsulfonsäuren mit Formaldehyd, und aliphatische Sulfonate, wie C₁₃-C₁₈-Alkansulfonate, alpha-Sulfo-fettsäure-C₂-C₈-alkylester, Sulfobernsteinsäureester und Alkoxy-, Acyloxy- und Acylaminoalkansulfonate.
Bevorzugt sind Alkylsulfonate, wobei die Di-(C₁-C₈-alkyl)naphthalinsulfonate besonders bevorzugt sind. Ganz besonders bevorzugt sind Diisobutyl- und Diisopropylnaphthalin-sulfonat. Beispiele für geeignete Sulfate sind C₈-C₁₁-Alkylsulfate.
Eine weitere wichtige Gruppe anionischer Additive bilden die Sulfonate, Sulfate, Phosphonate und Phosphate der als nichtionische Additive genannten Polyether. Diese können durch Umsetzung mit Phosphorsäure, Phosphorpentoxid und Phosphonsäure bzw. Schwefelsäure und Sulfonsäure in die Phosphorsäuremono- oder -diester und Phosphonsäureester bzw. die Schwefelsäuremonoester und Sulfonsäureester überführt werden. Diese sauren Ester liegen, wie die weiter oben aufgeführten Sulfonate und Sulfate, bevorzugt in Form wasserlöslicher Salze, insbesondere als Alkalimetallsalze, vor allem Natriumsalze und Ammoniumsalze vor, sie können jedoch auch in Form der freien Säuren eingesetzt werden. Bevorzugte Phosphate und Phosphonate leiten sich vor allem von alkoxylierten, insbesondere ethoxylierten, Fett- und Oxoalkoholen, Alkylphenolen, Sterylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin.
Derartige anionische oberflächenaktive Additive sind bekannt und im Handel z.B. unter den Namen Nekal® (BASF), Tamol® (BASF), Crodafos® (Croda), Rhodafac® (Rhodia), Maphos® (BASF), Texapon® (Cognis), Empicol® (Albright & Wilson), Matexil® (ICI), Soprophor® (Rhodia), Lutensit® (BASF) und Dispersogen (Clariant) erhältlich.

Übliche Zusatzstoffe sind beispielsweise Konservierungsmittel, pH-Regulatoren, Verdicker, Retentionsmittel und Entschäumer.

Zur Herstellung der erfindungsgemäßen Pigmentpräparationen können verschiedene Verfahren eingesetzt werden:
Verfahren 1 ist dadurch gekennzeichnet, dass das Pigment P in wässriger Suspension mit zumindest einem Teil der Komponenten b) und c) unter Einwirkung von Scherkräften feinverteilt wird, die so hergestellte Pigmentdispersion mit der polymerisierbaren Verbindung B, und gegebenenfalls unter Zugabe weiterer Komponente b) und/oder c) bei einer Temperatur oberhalb des Erweichungspunktes von B homogenisiert wird.

In einer bevorzugten Ausführungsform von Verfahren 1 wird das Pigment zunächst in wässriger Suspension mit zumindest einem Teil der Komponente b) und c) einer Nasszerkleinerung unterworfen. Die so hergestellte Pigmentdispersion wird mit flüssigem Wachs (Komponente B) und dem restlichen Teil der Komponenten b) und c) (Additive C und D) bei Temperaturen oberhalb des Schmelzpunktes des Wachses dispergiert. Zur Dispergierung können offene Gefäße mit einfachen Rühraggregaten eingesetzt werden, es können aber auch Dispergatoren wie sie aus der Lackherstellung bekannt sind, Hochdruckhomogenisatoren oder andere Druck-Mischkammerverfahren (Vortex) eingesetzt werden. Bei dieser Behandlung zieht das flüssige Wachs unter Ausbildung des polymerisierbaren Überzugs B auf das Pigment auf, wobei die beschichteten Partikel durch die Additive C und D stabilisiert werden.

Beim Verfahren 2 wird aus dem geschmolzenen Wachs (Komponente B) und einem Teil der Additive C und D zunächst eine Miniemulsion hergestellt, die nach Abkühlung dann mit dem Rest der Additive C und D und dem wässrigen Pigmentslurry einer Nasszerkleinerung unterworfen wird. Bei diesem Verfahren wird das Wachs auf die Pigmentteilchen aufgemahlen.

Bei beiden Verfahren resultiert eine Pigmentpräparation, bei der die Pigmentpartikel durch eine gut haftende polymerisierbare Wachsschicht bedeckt und durch die Additive C und D stabilisiert sind. So hergestellte Pigmentpräparationen sind gut kompatibel mit den üblichen Inhaltstoffen von Lacken, Anstrichmitteln oder Tinten. Insbesondere sind so hergestellte Pigmentpräparationen geeignet, bei Emulsionspolymerisationen chemisch eingebaut zu werden oder bei der Applikation in UV-härtenden Acrylatsystemen chemisch fixiert zu werden.

Aus den erfindungsgemäßen Pigmentpräparationen können durch geeignete Trocknungsverfahren, z.B. Sprühtrocknen, auch pulverförmige Pigmentzubereitungen hergestellt werden, die in Pulverlacken gut verträglich und leicht eindispergierbar sind und beim Einbrennen durch thermisch initiierte Polymerisation fixiert werden.

Gegenstand der Erfindung sind daher auch pulverförmige Pigmentzubereitungen, enthaltend 60 bis 90 Gew.-%, bevorzugt 70 bis 85 Gew.-%, eines Pigments, das mit 10 bis 40 Gew.-%, vorzugsweise 15 bis 30 Gew.-%, einer polymerisierbaren, ethylenisch ungesättigten Verbindung beschichtet ist, die ein Umsetzungsprodukt aus einem Polyol, langkettigen aliphatischen Carbonsäuren und mindestens einer ethylenisch ungesättigten Carbonsäure ist, das durch den Zusatz einer Dicarbonsäure oligomerisiert sein kann, sowie 0 bis10 Gew.-%, bevorzugt 0,01 bis 5 Gew.-%, der Komponente b) und c), wobei die Prozente auf das Gesamtgewicht der pulverförmigen Pigmentzubereitung bezogen sind.

Gegenstand der Erfindung ist ferner die Verwendung der erfindungsgemäßen Pigmentpräparation sowie der pulverförmigen Pigmentzubereitung, kurz "erfindungsgemäße Farbmittel" genannt, zur Einfärbung von wässrigen Anstrichmitteln, Lacken, Dispersionsfarben, Druckfarben und Tinten, sowie zum Färben von Papier, Holz, Leder und Ink-Jet-Tinten, insbesondere auf wässriger und nichtwässriger Basis, als Mikroemulsions- oder Hot-Melt-Ink-Jet-Tinten.

Mikroemulsionstinten basieren auf organischen Lösemitteln, Wasser und ggf. einer zusätzlichen hydrotropen Substanz (Grenzflächenvermittler). Mikroemulsionstinten enthalten im Allgemeinen 0,5 bis 30 Gew.-%, vorzugsweise 1 bis 15 Gew.-%, der erfindungsgemäßen Farbmittel, 5 bis 99 Gew.-% Wasser und 0,5 bis 94,5 Gew.-% organisches Lösungsmittel und/oder hydrotrope Verbindung.
"Solvent based" Ink-Jet-Tinten enthalten vorzugsweise 0,5 bis 30 Gew.-% der erfindungsgemäßen Farbmittel, 85 bis 99,5 Gew.-% organisches Lösungsmittel und/oder hydrotrope Verbindungen.
Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im Wesentlichen aus 20 bis 90 Gew.-% Wachs und 1 bis 10 Gew.-% der erfindungsgemäßen Farbmittel. Weiterhin können 0 bis 20 Gew.-% eines zusätzlichen Polymers, bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

In den Ink-Jet-Tinten können die erfindungsgemäßen Farbmittel auch mit anderen Farbmitteln wie beispielsweise anorganische oder organische Pigmente und/oder Farbstoffe nuanciert sein. Sie werden dabei in Tintensets, bestehend aus gelben, magenta, cyan und schwarzen Tinten, welche als Farbmittel Pigmente und/oder Farbstoffe enthalten, verwendet. Des Weiteren können sie in Tintensets verwendet werden, die zusätzlich eine oder mehrere der so genannten "spot colors" in den Farben beispielsweise orange, grün, blau, golden und silber enthalten.
Bevorzugt ist dabei ein Satz von Drucktinten, dessen schwarze Präparation bevorzugt Ruß als Farbmittel enthält, insbesondere einen Gas- oder Furnaceruß; dessen Cyan-Präparation bevorzugt ein Pigment aus der Gruppe der Phthalocyanin-, Indanthron- oder Triarylcarboniumpigmente enthält, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Blue 56, Pigment Blue 60 oder Pigment Blue 61; dessen Magenta-Präparation bevorzugt ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente enthält, insbesondere die Colour Index Pigmente Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 255, Pigment Red 256, Pigment Red 257, Pigment Red 262, Pigment Red 263, Pigment Red 264, Pigment Red 266, Pigment Red 269, Pigment Red 270, Pigment Red 272, Pigment Red 274, Pigment Violet 19, Pigment Violet 23 oder Pigment Violet 32; dessen Gelb-Präparation bevorzugt ein Pigment aus der Gruppe der Monoazo-, Disazo-, Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213 oder Pigment Yellow 219 ; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 71, Pigment Orange 72, Pigment Orange 73, Pigment Orange 74 oder Pigment Orange 81; dessen Grün-Präparation bevorzugt ein Pigment aus der Gruppe der Phthalocyaninpigmente enthält, insbesondere die Colour Index Pigmente Pigment Green 7 oder Pigment Green 36.

Zusätzlich können die Tintensets noch Nuancierfarbstoffe enthalten, vorzugsweise aus der Gruppe C.I. Acid Yellow 17 und C.I. Acid Yellow 23; C.I. Direct Yellow 86, C.I. Direct Yellow 98 und C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 und C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 und C.I. Reactive Red 180.

Die erfindungsgemäßen Farbmittel eignen sich zur Herstellung von Tinten für den Einsatz in allen konventionellen Ink-Jet-Druckern, insbesondere für solche, die auf dem Bubble-Jet- oder Piezo-Verfahren beruhen.

Die erfindungsgemäßen Farbmittel sind auch geeignet als Farbmittel in elektrophotographischen Tonern und Entwicklern, wie beispielsweise Ein- oder Zweikomponentenpulvertonem (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Farbmittel geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Leder, Textilmaterial, Papier oder Kautschuk zur Anwendung kommen.

Allgemeine Arbeitsvorschrift für die Beispiele 1 bis 9 (Verfahren 1):
(a) Herstellung einer Pigmentdispersion:
   Das Pigment wird, entweder als Pulver oder als Presskuchen, zusammen mit den Dispergiermitteln, dem organischen Lösemittel und den anderen Zusätzen in entionisiertem Wasser angeteigt und dann mit einem Dissolver oder einer anderen geeigneten Apparatur homogenisiert und vordispergiert. Die anschließende Feindispergierung erfolgt mit Hilfe einer Perlmühle (z.B. mit einer MiniZETA 03 der Firma Netzsch) oder einem anderen geeigneten Dispergieraggregat, wobei die Mahlung unter Kühlung bis zur gewünschten Teilchengrößenverteilung der Pigmentpartikel erfolgt. Im Anschluss wird die Dispersion mit entionisiertem Wasser auf die gewünschte Pigmentendkonzentration eingestellt.
(b) Herstellung der wachsgecoateten Pigmentpräparation:
   Polymerisierbares Wachs (z.B. ®Licomont ER 165 mit SZ:10,0) wird in einem Glaskessel bei einer Temperatur von etwa 120°C unter langsamem Rühren aufgeschmolzen.
      Nichtionisches Tensid (Niotensid, Additiv C) und Aniontensid (Additiv D) werden in einem zweiten Behältnis bei 90°C in einem Lösemittel (z.B. 1,2-Propylenglykol) gelöst und mit KOH versetzt.
      Das dabei entstehende Emulgatorengemisch wird unter intensiver Rührung bei ca. 100-120°C in die Wachsschmelze eingerührt.
      Die dabei entstehende Schmelze wird langsam in die auf etwa 90°C gebrachte Pigmentpräparation (a) gegossen und für kurze Zeit bei dieser Temperatur weitergerührt. Anschließend werden die weiteren Zusatzstoffe (z.B. Konservierungsmittel) zugesetzt.

### Beispiele 1 bis 5:

### a) Herstellung einer PY 155 - Pigmentdispersion:

| | |
|---|---|
| C.I. Pigment Yellow 155 | 20 |
| Niotensid | 10 |
| Aniontensid | 2 |
| ®Mergal K7 | 0,1 |
| ®Mergal K10N | 0,1 |
| 1,2-Propylenglykol | 10 |
| Wasser | 57,8 |

### b) Herstellung einer wachsgecoateten PY 155-Pigmentpräparation:

| | |
|---|---|
| ®Licomont ER 165 | 240 |
| Aniontensid | 16 |
| Niotensid | 34 |
| KOH 43 %ig | 10 |
| Wasser | 300 |
| Pigmentdispersion aus (a) | 1800 |

| | Coating | Pigment | Emulgator | | TSC |
|---|---|---|---|---|---|
| | % | % | % | Typ | % |
| Beispiel 1: | 10 | 15 | 2,3 | 1 | 28 |
| Beispiel 2: | 10 | 15 | 2,3 | 1 | 28 |
| Beispiel 3: | 10 | 15 | 2,3 | 4 | 28 |
| Beispiel 4: | 10 | 15 | 2,3 | 3 | 28 |
| Beispiel 5: | 7 | 16 | 1,4 | 2 | 25 |

| | |
|---|---|
| Emulgator: Niotensid + Aniontensid | |
| Niotensid: | ®Genapol T 110, |
| Aniontensid: | Genapol LRO (Typ 1), |
| | ®Dispersogen LFES (Typ 2), |
| | Dispersogen LFH (Typ 3), |
| | Dispersogen T 160 (Typ 4). |

Genapol und Dispersogen sind Handelsmarken der Clariant.
®Licomont ER 165 = Pentaerythrit-2,5-montanat-acrylat (Licomont ist eine Handelsmarke der Clariant);
TSC = total solid content = Festkörpergehalt.

### Beispiele 6 und 7:

### a) Herstellung einer Pigment Red 122 - Pigmentdispersion:

| | |
|---|---|
| C.I. Pigment Red 122 | 20 |
| Niotensid | 10 |
| Aniontensid | 2 |
| Mergal K7 | 0,1 |
| Mergal K10N | 0,1 |
| 1,2-Propylenglykol | 10 |
| Wasser | 57,8 |

### b) Herstellung einer wachsgecoateten PR 122-Pigmentpräparation:

| | |
|---|---|
| Licomont ER 165 | 240 |
| Aniontensid | 16 |
| Niotensid | 34 |
| KOH 43%ig | 10 |
| Wasser | 300 |
| Pigmentdispersion aus (a): | 1800 |

| | Coating | Pigment | Emulgator | | TSC |
|---|---|---|---|---|---|
| | % | % | % | Typ | % |
| Beispiel 6: | 10 | 15 | 2,3 | 1 | 30 |
| Beispiel 7: | 10 | 15 | 2,3 | 4 | 30 |

| | |
|---|---|
| Niotensid: | Genapol T 110; |
| Aniontensid: | Genapol LRO (Typ 1), Dispersogen T 160 (Typ 4). |

### Beispiel 8

### (a) Herstellung einer Pigment Blue 15:3 - Pigmentdispersion:

| | |
|---|---|
| C.I. Pigment Blue 15:3 | 20 |
| Niotensid | 10 |
| Aniontensid | 2 |
| Mergal K7 | 0,1 |
| Mergal K10N | 0,1 |
| 1,2-Propylenglykol | 10 |
| Wasser | 57,8 |

### (b) Herstellung einer wachsgecoateten PB 15:3-Pigmentpräparation:

| | |
|---|---|
| Licomont ER 165 | 240 |
| Aniontensid | 16 |
| Niotensid | 34 |
| KOH 43 %ig | 10 |
| Wasser | 300 |
| Pigmentdispersion nach (a) | 1800 |

Coating: 10 %; Pigment: 15 %; Emulgator, Typ (1): 2,3 %.

### Beispiel 9

### (a) Herstellung einer Pigment Black 7 - Pigmentdispersion:

| | |
|---|---|
| C.I. Pigment Black 7 | 20 |
| Niotensid | 10 |
| Aniontensid | 2 |
| Mergal K7 | 0,1 |
| Mergal K10N | 0,1 |
| 1,2-Propylenglykol | 10 |
| Wasser | 57,8 |

### (b) Herstellung einer wachsgecoateten PBlack 7-Pigmentpräparation:

| | |
|---|---|
| Licomont ER 165 | 240 |
| Aniontensid | 16 |
| Niotensid | 34 |
| KOH 43 %ig | 10 |
| Wasser | 300 |
| Pigmentdispersion nach (a) | 1800 |

Coating: 10 %; Pigment: 15 %; Emulgator, Typ (1): 2,3 %.

Allgemeine Arbeitsvorschrift für die Beispiele 10 bis 19 (Verfahren 2):
(a) Herstellung einer Pigmentdispersion:
   Analog der in Verfahren 1 beschriebenen Vorgehensweise.
(b) Herstellung einer Miniemulsion:
   Zur Herstellung einer Wachs-Miniemulsion wird das polymerisierbare Wachs B in geschmolzener Form in eine wässrige Lösung der nichtionischen und anionischen Tenside oberhalb der Schmelztemperatur des Wachses eingerührt und gegebenenfalls dispergiert, wobei eine Öl-in-Wasser-Emulsion entsteht.
(c) Herstellung einer wachsgecoateten Pigmentdispersion:
   Die in (b) hergestellte Miniemulsion wird mit restlichem nichtionischem und anionischem Tensid versetzt und die in (a) hergestellte Pigmentdispersion zudosiert. Mit Hilfe eines Mahl- oder Dispergieraggregates wird das Wachs auf die Pigmentteilchen aufgemahlen.

Die in den Beispielen 1 bis 9 beschriebenen Polymerdispersionen werden nach der Vorgehensweise von Verfahren 2 hergestellt: Beispiele 10 bis 18.

Anwendungsbeispiele:
(A) Drucktinten:
   Die erfindungsgemäßen Pigmentpräparationen sowie als Vergleich die entsprechenden Standarddispersionen (vorstehende Schritte a) wurden in Drucktinten eingearbeitet. Nur bei den erfindungsgemäßen Pigmentpräparationen konnte ein Durchschlagen der Farbe durch das Papier vermieden werden. Es entstand ein glänzendes, wasserfestes Bild. Bilder mit den Standarddispersionen waren nicht wasserfest und zeigten praktisch keinen Glanz.
(B) Flüssige Lacke und Dispersionsfarben:
   Die erfindungsgemäßen Pigmentpräparationen sowie als Vergleich die entsprechenden Standarddispersionen (a) wurden in Lacke und Dispersionsfarben eingearbeitet. Der Farbanstrich mit den erfindungsgemäßen Pigmentpräparationen war wesentlich wasserfester als mit den Standarddispersionen.
(C) Pulverlacke:
   Die erfindungsgemäßen Pigmentpräparationen sowie als Vergleich die entsprechenden Standarddispersionen (a) wurden sprühgetrocknet und in Pulverlacke eingearbeitet.
   Bei den erfindungsgemäßen Pulverlacken war die Farbausbeute höher und die chemische Fixierung in der Matrix nach dem Einbrennen wesentlich besser als bei den Standardpulverlacken.

## Patentansprüche

1. Pigmentpräparation, enthaltend als wesentliche Bestandteile
(a) 5 bis 70 Gew.-% mindestens eines Pigments P, das mit mindestens einer polymerisierbaren, ethylenisch ungesättigten Verbindung B beschichtet ist;
(b) 0,1 bis 15 Gew.-% mindestens eines nichtionischen oberflächenaktiven Additivs C auf der Basis von Polyethern und/oder Polyglycerinen;
(c) 0,1 bis 15 Gew.-% mindestens eines anionischen oberflächenaktiven Additivs D auf der Basis von Sulfonaten, Sulfaten, Carboxylaten, Phosphonaten oder Phosphaten;
(d) 10 bis 90 Gew.-% Wasser,
(e) 0 bis 20 Gew.-% übliche Zusatzstoffe,
wobei die Summe der Gewichtsprozente 100 Gew.-% nicht überschreitet.

2. Pigmentpräparation nach Anspruch 1, **dadurch gekennzeichnet, dass** das Pigment P ein organisches Buntpigment, ein anorganisches Buntpigment, ein Weißpigment, ein Russpigment oder eine Kombination mehrerer Pigmente ist.

3. Pigmentpräparation nach Anspruch 1 oder 2, **dadurch gekennzeichnet, dass** das Pigment P ein Azopigment, ein Anthanthronpigment, ein Anthrapyrimidinpigment, ein Chinacridonpigment, ein Chinophthalonpigment, ein Diketopyrrolopyrrolpigment, ein Dioxazinpigment, ein Indanthronpigment, ein Isoindolinpigment, ein Isoindolinonpigment, ein Isoviolanthronpigment, ein Perylenpigment, ein Perinonpigment, ein Phthalocyaninpigment, ein Pyranthronpigment, ein Pyrazolochinazolonpigment, ein Thioindigopigment, ein Triarylcarboniumpigment oder eine Kombination davon ist.

4. Pigmentdispersion nach einem oder mehreren der Ansprüche 1 bis 3, **dadurch gekennzeichnet, dass** das Pigment P ein Gelb-, Cyan-, Magenta- oder Schwarz-Pigment ist.

5. Pigmentpräparation nach einem oder mehreren der Ansprüche 1 bis 4, **dadurch gekennzeichnet, dass** die polymerisierbare, ethylenisch ungesättigte Verbindung B ein Umsetzungsprodukt aus einem Polyol, langkettigen aliphatischen Carbonsäuren und mindestens einer ethylenisch ungesättigten Carbonsäure ist, das durch den Zusatz einer Dicarbonsäure oligomerisiert sein kann.

6. Pigmentpräparation nach einem oder mehreren der Ansprüche 1 bis 5, **dadurch gekennzeichnet, dass** die Menge der polymerisierbaren, ethylenisch ungesättigten Verbindung B zum Pigment P 5 bis 95 Gew.-%, relativ zum Gewicht des Pigments P, beträgt.

7. Verfahren zur Herstellung einer Pigmentpräparation nach einem oder mehreren der Ansprüche 1 bis 6, **dadurch gekennzeichnet, dass** das Pigment P in wässriger Suspension mit zumindest einem Teil der Komponenten b) und c) unter Einwirkung von Scherkräften feinverteilt wird, die so hergestellte Pigmentdispersion mit der polymerisierbaren Verbindung B, und gegebenenfalls unter Zugabe weiterer Komponente b) und/oder c) bei einer Temperatur oberhalb des Erweichungspunktes von B homogenisiert wird.

8. Verfahren zur Herstellung einer Pigmentpräparation nach einem oder mehreren der Ansprüche 1 bis 6, **dadurch gekennzeichnet, dass** aus der polymerisierbaren Verbindung B und zumindest einem Teil der Komponenten b) und c) zunächst eine Miniemulsion hergestellt wird, die nach Abkühlung dann mit dem Rest der Komponenten b) und c) und einer wässrigen Suspension von Pigment P einer Nasszerkleinerung unterworfen wird.

9. Verwendung einer Pigmentpräparation nach einem oder mehreren der Ansprüche 1 bis 6 zur Einfärbung von wässrigen Anstrichmitteln, Lacken, Dispersionsfarben, Druckfarben und Tinten, insbesondere Ink-Jet-Tinten, sowie zum Färben von Papier, Holz, und Leder.

10. Pulverförmige Pigmentzubereitung, enthaltend 60 bis 90 Gew.-% eines Pigments, das mit 10 bis 40 Gew.-% einer polymerisierbaren, ethylenisch ungesättigten Verbindung beschichtet ist, die ein Umsetzungsprodukt aus einem Polyol, langkettigen aliphatischen Carbonsäuren und mindestens einer ethylenisch ungesättigten Carbonsäure ist, das durch den Zusatz einer Dicarbonsäure oligomerisiert sein kann.

11. Verfahren zur Herstellung pulverförmiger Pigmentzubereitungen nach Anspruch 10, **dadurch gekennzeichnet, dass** man eine Pigmentpräparation gemäß einem oder mehreren der Ansprüche 1 bis 6 von Lösungsmitteln befreit und trocknet.

12. Verwendung einer Pigmentzubereitung nach Anspruch 10 zum Färben von Pulverlacken, UV-härtenden Lacken, elektrophotographischen Tonern und Entwicklern.

## Claims

1. A pigment preparation comprising as essential constituents
(a) 5% to 70% by weight of at least one pigment P which is coated with at least one polymerizable, ethylenically unsaturated compound B;
(b) 0.1 % to 15% by weight of at least one nonionic surface-active additive C based on polyethers and/or polyglycerols;
(c) 0.1 % to 15% by weight of at least one anionic surface-active additive D based on sulfonates, sulfates, carboxylates, phosphonates or phosphates;
(d) 10% to 90% by weight of water
(e) 0% to 20% by weight of typical auxiliaries,
the sum of the weight percentages not exceeding 100% by weight.

2. The pigment preparation as claimed in claim 1, wherein the pigment P is an organic chromatic pigment, an inorganic chromatic pigment, a white pigment, a carbon black pigment or a combination of two or more pigments.

3. The pigment preparation as claimed in claim 1 or 2, wherein the pigment P is an azo pigment, an anthanthrone pigment, an anthrapyrimidine pigment, a quinacridone pigment, a quinophthalone pigment, a diketopyrrolopyrrole pigment, a dioxazine pigment, an indanthrone pigment, an isoindoline pigment, an isoindolinone pigment, an isoviolanthrone pigment, a perylene pigment, a perinone pigment, a phthalocyanine pigment, a pyranthrone pigment, a pyrazoloquinazolone pigment, a thioindigo pigment, a triarylcarbonium pigment or a combination thereof.

4. The pigment dispersion as claimed in one or more of claims 1 to 3, wherein the pigment P is a yellow, cyan, magenta or black pigment.

5. The pigment preparation as claimed in one or more of claims 1 to 4, wherein the polymerizable, ethylenically unsaturated compound B is a reaction product of a polyol, long-chain aliphatic carboxylic acids, and at least one ethylenically unsaturated carboxylic acid, and may have been oligomerized by the addition of a dicarboxylic acid.

6. The pigment preparation as claimed in one or more of claims 1 to 5, wherein the amount of the polymerizable, ethylenically unsaturated compound B to the pigment P is 5% to 95% by weight, relative to the weight of the pigment P.

7. A process for preparing a pigment preparation as claimed in one or more of claims 1 to 6, which comprises subjecting the pigment P in aqueous suspension to fine division with at least one part of the components b) and c), under the action of shearing forces, homogenizing the thus prepared pigment dispersion with the polymerizable compound B, and optionally with addition of further component b) and/or c) at a temperature above the softening point of B.

8. A process for preparing a pigment preparation as claimed in one or more of claims 1 to 6, which comprises first preparing a miniemulsion from the polymerizable compound B and at least one part of components b) and c), and then subjecting this miniemulsion, after cooling, to wet comminution with the remainder of the components b) and c) and an aqueous suspension of pigment P.

9. The use of a pigment preparation as claimed in one or more of claims 1 to 6 for coloring aqueous coating materials, varnishes, emulsion paints, printing inks and liquid inks, more particularly ink-jet inks, and also for coloring paper, wood, and leather.

10. A pigment preparation in powder form, containing 60% to 90% by weight of a pigment which is coated with 10% to 40% by weight of a polymerizable, ethylenically unsaturated compound which is a reaction product of a polyol, long-chain aliphatic carboxylic acids, and at least one ethylenically unsaturated carboxylic acid, and which may have been oligomerized by the addition of a dicarboxylic acid.

11. A process for producing a pigment preparation in powder form as claimed in claim 10, which comprises freeing a pigment preparation as claimed in one or more of claims 1 to 6 from solvents and subjecting it to drying.

12. The use of a pigment preparation as claimed in claim 10 for coloring powder coating materials, UV-curing varnishes or electrophotographic toners and developers.

## Revendications

1. Préparation de pigment, contenant en tant que composants essentiels
(a) 5 à 70 % en poids d'au moins un pigment P qui est enrobé avec au moins un composé B polymérisable, à insaturation éthylénique ;
(b) 0,1 à 15 % en poids d'au moins un additif tensioactif non ionique C à base de polyéthers et/ou de polyglycérols ;
(c) 0,1 à 15 % en poids d'au moins un additif tensioactif anionique D à base de sulfonates, sulfates, carboxylates, phosphonates ou phosphates ;
(d) 10 à 90 % en poids d'eau,
(e) 0 à 20 % en poids d'additifs usuels,
la somme des pourcentages en poids n'excédant pas 100 % en poids.

2. Préparation de pigment selon la revendication 1, **caractérisée en ce que** le pigment P est un pigment coloré organique, un pigment coloré inorganique, un pigment blanc, un pigment noir de carbone ou une association de plusieurs pigments.

3. Préparation de pigment selon la revendication 1 ou 2, **caractérisée en ce que** le pigment P est un pigment azoïque, un pigment anthanthrone, un pigment anthrapyrimidine, un pigment quinacridone, un pigment quinophtalone, un pigment dicétopyrrolopyrrole, un pigment dioxazine, un pigment indanthrone, un pigment iso-indoline, un pigment iso-indolinone, un pigment isoviolanthrone, un pigment pérylène, un pigment périnone, un pigment phtalocyanine, un pigment pyranthrone, un pigment pyrazoloquinazolone, un pigment thio-indigo, un pigment triarylcarbonium ou une association de ceux-ci.

4. Préparation de pigment selon une ou plusieurs des revendications 1 à 3, **caractérisée en ce que** le pigment P est un pigment jaune, cyan, magenta ou noir.

5. Préparation de pigment selon une ou plusieurs des revendications 1 à 4, **caractérisée en ce que** le composé B polymérisable à insaturation éthylénique est un produit de réaction d'un polyol, d'acides carboxyliques aliphatiques à longue chaîne et d'au moins un acide carboxylique à insaturation éthylénique, qui peut être oligomérisé par l'addition d'un acide dicarboxylique.

6. Préparation de pigment selon une ou plusieurs des revendications 1 à 5, **caractérisée en ce que** la quantité du composé B polymérisable, à insaturation éthylénique, par rapport au pigment P va de 5 à 95 % en poids, par rapport au poids du pigment P.

7. Procédé pour la production d'une préparation de pigment selon une ou plusieurs des revendications 1 à 6, **caractérisé en ce que** le pigment P est finement dispersé, sous l'effet de forces de cisaillement, en suspension aqueuse avec au moins une partie des composants b) et c), on homogénéise la dispersion de pigment, ainsi préparée, avec le composé polymérisable B, et éventuellement avec addition de composant b) et/ou de composant c) supplémentaires, à une température supérieure au point de ramollissement de B.

8. Procédé pour la production d'une préparation de pigment selon une ou plusieurs des revendications 1 à 6, **caractérisé en ce que** d'abord on prépare à partir du composé polymérisable B et d'au moins une partie des composants b) et c) une mini-émulsion qui, après refroidissement, est ensuite soumise à une fragmentation par voie humide avec le reste des composants b) et c) et une suspension aqueuse du pigment P.

9. Utilisation d'une préparation de pigment selon une ou plusieurs des revendications 1 à 6, pour la coloration d'enduits à l'eau, de peintures, de peintures-dispersion, d'encres d'impression et d'encres, en particulier d'encres pour impression par jet d'encre, ainsi que pour la coloration du papier, du bois et du cuir.

10. Préparation de pigment pulvérulente, contenant de 60 à 90 % en poids d' un pigment qui est enrobé avec 10 à 40 % en poids d'un composé polymérisable, à insaturation éthylénique, qui est un produit de réaction d'un polyol, d'acides carboxyliques aliphatiques à longue chaîne et d'au moins un acide carboxylique à insaturation éthylénique, qui peut être oligomérisé par l'addition d'un acide dicarboxylique.

11. Procédé pour la production de préparations de pigments pulvérulentes selon la revendication 10, **caractérisé en ce qu'**on sépare des solvants et sèche une préparation de pigment selon une ou plusieurs des revendications 1 à 6.

12. Utilisation d'une préparation de pigment selon la revendication 10, pour la coloration de peintures en poudre, de peintures durcissant aux UV, de toners et développeurs électrophotographiques.
